# EUROPEAN PATENT SPECIFICATION

(11) **EP 4 535 125 B1**
(45) Date of publication and mention of the grant of the patent: **26.08.2026**
(21) Application number: 23201812.7
(22) Date of filing: 05.10.2023
(51) Int. Cl.: G06F 3/01, B60K 35/00, G06V 20/59, H04N 7/15

(54) **PERSONALIZED INTERACTIVE VIRTUAL ENVIRONMENT IN VEHICLES**
PERSONALISIERTE INTERAKTIVE VIRTUELLE UMGEBUNG IN FAHRZEUGEN
ENVIRONNEMENT VIRTUEL INTERACTIF PERSONNALISÉ DANS DES VÉHICULES

(43) Date of publication of application: 09.04.2025
(73) Proprietor: Harman Becker Automotive Systems GmbH, 76307 Karlsbad (DE)
(72) Inventor: Amthor, Peter, 81827 München (DE)
(74) Representative: Kraus & Lederer PartGmbB

(56) References cited:
- WO-A1-2022/071963
- US-A1- 2014 309 806
- US-A1- 2019 355 178

## Description

### TECHNICAL FIELD

Various examples of the disclosure generally relate to the field of interactive virtual environments in vehicles. Various examples of the disclosure specifically relate to methods and systems for personalized, virtual interaction of occupants within a vehicle using real-time sensor data and pre-configured user preferences.

### BACKGROUND

Interaction of occupants in a vehicle with communication platforms presents a set of technical challenges. Traditional in-car entertainment and communication systems are often limited to manual user interfaces for configuration and lack the degree of interactivity and personal communication that users expect. User interfaces should be intuitive for occupants to easily understand the virtual environment, yet flexible enough to allow for personalized experiences. The task is complicated by the limited attention span available from occupants of a vehicle, additionally participating in public traffic may pose safety restrictions.

It is difficult to maintain user-friendliness of communication platforms in vehicles due to the continuously changing internal and external conditions of the vehicle. Variables such as number of occupants, speed, lighting, and temperature can fluctuate rapidly, often making it challenging to maintain a stable and user-friendly virtual experience. When driving a vehicle, safely interacting with communication platform presents challenges.

Traditional methods of indicating presence or status, like changing an online profile or sending a message, require visually focusing on and manually operating a device. The changing conditions inside and outside the vehicle may restrict the user's ability to maintain an overview over availability of other persons within the virtual environment, leading to discomfort and potentially to miscommunications.

US2014/309806A1, WO2022/071963A1, and US2019/355178A1 provide examples of related work.

### SUMMARY

Accordingly, there is a need for advanced techniques for providing a communication platform, in particular a virtual communication environment in vehicles, which alleviate or mitigate at least some of the above-identified restrictions and drawbacks.

This need is met by the features of the independent claims. The features of the dependent claims define further advantageous examples.

In the following, the solution according to the present disclosure will be described with regard to the claimed methods as well as with regard to the claimed computing devices, virtual environment systems, and vehicles, wherein features, advantages, or alternative embodiments can be assigned to the other claimed objects and vice versa. **In** other words, the claims related to the devices and systems can be improved with features described in the context of the methods, and the methods can be improved with features described in the context of the devices and systems.

A method for providing an interactive virtual environment, in particular a virtual communication environment, within a vehicle is provided. In particular, the interactive virtual environment may be provided to an occupant while using the vehicle, in particular to a driver while driving the vehicle. The virtual environment may enable communication to other remote persons represented in the virtual environment, which are not situated in the vehicle.

In a step, sensor data from at least one vehicle sensor is acquired. Sensing the inside and/or outside of the vehicle in order to gather data associated with or corresponding to the occupant may be used to identify presence and/or identity of the occupant within the vehicle. The sensor data may be received by a processing device, in other words a computing device, of the vehicle, which further processes the sensor data.

In various examples, sensor data from at least one onboard vehicle sensor, which may monitor the interior of the vehicle, for example the cabin, or the exterior, for example the traffic or surrounding environment of the vehicle, is acquired. Among various types of sensors, the at least one vehicle sensor can include for example one of an in-cabin camera, fatigue detection sensor, seat-embedded pressure sensor, or a digital key sensor.

The at least one sensor can face and/or be located both internal and external to the vehicle. The vehicle sensor can be attached to the vehicle. Internal sensors may include an in-cabin camera located on the dashboard, a seat-embedded pressure sensor in the driver and passenger seats, and a fatigue detection sensor integrated into the steering wheel. External sensors could include door handle sensors or digital key sensors that detect proximity, or cameras sensing the exterior environment of the vehicle. These various sensors serve to recognize a person as an occupant of the vehicle, and further for example to differentiate between the driver and other occupants.

For instance, an in-cabin camera could capture facial features and posture and communicate this data through the vehicle's internal communication network, such as a Controller Area Network (CAN) bus. A seat-embedded pressure sensor could detect the weight and posture of the occupant, and transmit this data similarly. Door handle sensors or digital key sensors could detect the initial approach and entry of the occupant, differentiating between the driver and passengers.

Sensor data acquired from multiple internal and external sensors can be fused and simultaneously processed to enhance the detection of presence and identification of the occupant. For example, the in-cabin camera may capture facial features, while a seat-embedded pressure sensor could provide data on weight and posture. A fatigue detection sensor in the steering wheel could offer additional behavioral data, such as grip patterns. All these sensor data may be processed separately of fused to be included in sensor data, which can be processed to determine occupant data representing the presence and/or identity of the occupant.

In an example, the processing device could employ machine learning algorithms or decision trees to integrate the sensor data including for instance facial recognition data, weight, posture, and grip pattern to accurately identify the occupant. In other words, rather than relying on a single sensor's data, the system fuses multiple sensors to create a more reliable and robust presence detection and identification mechanism. Such a multi-sensor approach may be especially beneficial in scenarios where one sensor's data might be ambiguous or compromised, as the system can fall back on data from other sensors to ensure accurate presence detection and identification.

Accordingly, in a further step, the sensor data is processed, to determine occupant data associated with an occupant inside the vehicle. In other words, base on the sensor data or using the sensor data, the occupant data is generated or computed. The processing my be performed by the processing device or computing device in the vehicle.

In various examples, processing the sensor data can comprise detecting entry of the occupant into the vehicle and identifying the occupant. In various examples, the processing device might determine whether the occupant is the driver or a passenger, and if and/or where they are in the cabin. In other words, based on and/or using the sensor data, occupant data is determined, which can include information that represents the entrance and/or presence of the occupant, as well as the identification of the occupant.

The sensor data can be processed by an onboard processing device to determine the occupant data associated with an occupant inside the vehicle. This can involve detecting the entry of the occupant into the vehicle and identifying the occupant. In various examples, the processing device might determine whether the occupant is the driver or a passenger, and if they are in the cabin.

In various examples, the sensor data is processed to determine occupant data, which includes the identification of the occupant inside the vehicle. Specifically, this may involve using facial recognition or biometric sensors to verify the identity of the occupant. In various examples, the processing device could determine whether the occupant is the driver, or a passenger based on the sensor data. The identity could be used to load personalized settings or preferences within the interactive virtual environment.

In various examples, based on the sensor data and/or using the sensor data, a physical state of the occupant may be estimated or determined, and represented with in the virtual environment. In addition to presence detection and identification, the sensor data acquired from the various internal and external vehicle sensors can also be processed to determine a physical state or wellbeing of the occupant. For example, temperature sensors inside the vehicle cabin could detect if an occupant has increased temperature, indicating discomfort. Data from pressure sensors in the seats could analyze the occupant's posture and movements, potentially detecting discomfort, or agitation. Sensors embedded in seatbelts or radar sensors could track respiratory rate. In-cabin cameras with computer vision capabilities could potentially analyze facial expressions and body language to evaluate mood, pain levels, or alertness.

Many modern vehicles already contain an array of sensors that monitor vehicle status for other purposes like vehicle control, entertainment, and safety. With appropriate processing, data from these existing sensors could also provide insight into an occupant's physical state. For example, pressure sensors in seats that are meant to detect occupancy for airbag deployment could also analyze fidgeting or frequent shifting that may indicate discomfort. Microphones intended for hands-free phone calling could potentially process vocal tone and patterns to detect signs of illness, frustration, or fatigue. Accelerometers and motion sensors meant for vehicle stability control could also register irregular gestures or driving behaviors that may be linked to impairments in occupant wellbeing or ability.

By processing these various sensor data sources already embedded in modern vehicles, the system can make computer-assisted determination of an occupant's physical condition, health status, or wellbeing. This provides generation of a more accurate digital profile of the occupant, beyond just presence detection and identification, which may be relevant to be displayed in the virtual environment during a conversation with another person in the virtual environment. The occupant's physical state data can then be incorporated and represented in the virtual environment for example by changing the look, posture and or movement of the corresponding avatar during interactions and conversations.

In various examples, several types of processing devices can perform the computation required for occupant identification based on sensor data. The central processing unit (CPU), often termed the vehicle control unit, serves as the primary computing hub for coordinating various functions and processing data. This unit can be responsible for integrating sensor data and applying algorithms for occupant identification.

In various examples, in addition to the CPU, domain controllers like infotainment systems can also perform specialized processing tasks. For example, an infotainment domain controller could handle the processing related to occupant entertainment preferences, or even certain aspects of identity verification if linked to personal mobile devices or user accounts.

Zone architecture computing devices are another essential component in this context. These are specialized computing units designed to process the sensor data and controls specific to a particular zone within the vehicle, such as the driver's area or the back seat. They could, for instance, process the data from seat-embedded pressure sensors or in-cabin cameras located in their designated zones to contribute to the overall occupant identification process.

Other examples of processing devices could include dedicated units for advanced driver-assistance systems (ADAS) that also collect and process sensor data for various safety features. These ADAS systems could share relevant data, like fatigue detection measures, with the main CPU or domain controllers for more comprehensive occupant identification.

These various computing devices usually communicate through a vehicle's internal network, such as a Controller Area Network (CAN) bus, to share and coordinate sensor data for processing. By distributing the computational load to specialized units, modern vehicles can perform complex tasks like occupant identification more efficiently and reliably.

In a further step, an interactive virtual environment is configured by the processing device based on and/or using the determined occupant data. Optionally, a virtual environment may be first initiated, or initially displayed to the occupant.

The interactive virtual environment may be configured based on the determined occupant data, and thereby based on or using vehicle sensor data. This configuration could include a 3D model of a meeting area and the occupant. In other words, the environment could be set up to include virtual representations of both the occupant and an external meeting area, which represents a real meeting area, in which the occupant and the other person usually communicate in person, i.e. in real life.

In various examples, a processing device within the vehicle may perform the steps of initiating and/or configuring the virtual environment using the occupant data. It may also communicate at least part of the occupant data over a communication network to receive additional data for further refinement of the virtual environment. For example, upon recognizing that the occupant is the driver, the device could send a query to a server to pull in favorite playlists or news channels of the driver for incorporation into the virtual space.

Alternatively, at least part of the configuration of the virtual environment could be executed externally, based on transmitted occupant data. In this case, the processing device transmits the occupant data to an external server, which then performs the configuration. Virtual environment data is then sent back to the vehicle for initiating the virtual environment. This data could include information or a 3D model relating to a different person outside the vehicle, who could be represented in the virtual environment.

In a further step, the interactive virtual environment is displayed to the occupant. Displaying may be performed on a vehicle display device. Various types of display devices could be used, including an integrated infotainment screen or a heads-up display projected onto the windshield.

The interactive virtual environment can be presented to the vehicle occupant on a variety of display devices integrated into the vehicle. A broad range of visual, audio, and haptic display technologies within the vehicle cabin can be used to project the interactive virtual experience to the occupant for creating an immersive user setting.

In various examples, the main infotainment screen typically positioned in the center console area. These high-resolution LCD/OLED displays are driven by a graphics processing module to render the virtual environment. Occupants in both the front and back seats may have visibility of the central infotainment screen. Another possibility is to use a heads-up display (HUD) system that uses vehicle projection optics to overlay the virtual interface graphics onto the windshield glass, allowing for better communication within the virtual environment. The HUD system often includes a small projection unit and combiner optics mounted under the dashboard. The digital instrument cluster behind the steering wheel can also serve as a display surface for virtual objects specific to the driver. Here the rendered elements can be overlaid onto the digital speedometer, tachometer, and other gauge graphics the cluster provides. For passengers in the rear cabin, a dedicated rear seat entertainment display can be utilized to present the virtual environment. These displays are typically integrated into the back of the front seat headrests. Personal mobile devices like tablets or smartphones brought into the vehicle can participate in the virtual environment through a docking mechanism that connects them to the system. Their onboard displays and speakers become extensions of the rendered environment.

Therefore, by the techniques according to the present disclosure, the use of vehicle sensor in conjunction with virtual environments reduces complexity when interacting with the vehicle's communication systems, particularly in the context of communication with other persons in virtual environments. For example, the sensors can automate user identification and preferences, eliminating the need for manual setup each time the vehicle is used. This simplification is especially beneficial in virtual settings, where ease of interaction is crucial for an immersive experience, such that the presence and identity of all communicating persons can easily be represented.

By exchanging information between vehicle communication buses and personal communication channels such as communication platforms and virtual environments with avatars, the techniques facilitate seamless integration of external elements, such as 3D models or real-time data, into the virtual environment. This eliminates the need for the occupant to manually input or update such information, thereby reducing interaction complexity.

The sensor may be selected from a group of sensors that include but are not limited to an in-cabin camera, a fatigue detection sensor, a seat-embedded pressure sensor, a smartphone-enabled NFC or Bluetooth sensor, a digital key sensor, and an in-cabin radar sensor.

An in-cabin camera may be positioned to capture the interior of the vehicle, specifically targeting the driver's and passengers' seating and activity zones. This type of sensor can acquire real-time video or image data of the vehicle's occupants.

A fatigue detection sensor may utilize infrared technology to monitor the driver's eye movements and facial expressions. The fatigue detection sensor uses infrared emitters to illuminate the driver's face with non-visible light. The reflecting infrared light is captured by an infrared camera sensor. This light data is processed to analyze eyelid movement, gaze, head pose, etc. to detect signs of fatigue. The sensor may provide data representing eye closure rate, blink duration, and facial expressions.

The seat-embedded pressure sensor may be integrated into the seat cushion and backrest of the vehicle. These sensors can detect weight, distribution of pressure, and also the posture of the occupant, which can then be used to adjust the seat or climate control settings for optimal comfort. The seat pressure sensor uses an array of force-sensitive resistors embedded in the seat cushion and backrest. These resistors change electrical resistance based on applied pressure. The sensors detect distribution of weight and force across the seat surface. The data may represent weight, posture, position, and movement of the occupant.

A smartphone-enabled NFC (Near Field Communication) or Bluetooth sensor allows for secure communication between the vehicle's systems and a smartphone. By doing so, it may enable features like personalized settings, authentication, or even remote control of certain vehicle functionalities. The smartphone-enabled sensors use NFC or Bluetooth protocols for proximity-based communication with a paired smartphone device. They transmit radio signals that can identify the phone and extract basic identification or authentication data from it. This may provide data representing the identity and presence of the smartphone carrying occupant.

The digital key sensor acts as an electronic lock and enables access to the vehicle without a traditional mechanical key. This sensor may recognize a secure digital token from a dedicated device or even a smartphone application. The digital key sensor is an RFID reader that reads the unique ID from the RFID tag in the digital key device. It provides presence and authentication data to identify the digital key carrying occupant and authorize vehicle access.

An in-cabin radar sensor employs radio waves to detect and monitor the movement and position of occupants within the vehicle. It may be particularly useful for assessing the vehicle interior in low light or obstructed conditions where a camera sensor may be less effective. The in-cabin radar sensor transmits low-power radio waves and analyzes the reflected waves using radar technology. It detects occupants' location, movement, posture, respiration, etc. It provides positional data locating occupants in 3D space within the cabin.

The sensor data of various types of sensors could be combined or fused to provide a comprehensive understanding of the occupant for configuring the virtual environment.

Processing the sensor data may comprise detecting entry and/or presence of the occupant into/in the vehicle, and the occupant data may include an indication of the presence of occupant in the cabin of the vehicle.

In various examples, the camera can analyze image frames to detect motion of an entering occupant. Background modeling can distinguish between vacant and occupied seats. The seat pressure sensor can detect weight and pressure distribution changes indicating seat occupancy. Detection of a paired smartphone via Bluetooth or NFC indicates occupant entry. Authentication by the digital key sensor also implies presence of the key owner. The radar sensor also provides motion and seating area occupancy data. By processing sensor data including one or more of the above input data, the processor can determine occupant entry events and presence of an occupant inside the vehicle.

Processing the sensor data may comprise determining the identity of the occupant, and the occupant data may include identification data representing the identity of the occupant.

In various examples, a smartphone sensor and a digital key sensor may provide identity information. The Bluetooth MAC address or NFC ID may identify the smartphone and its user. The digital key ID corresponds to the assigned key owner. The camera and radar could also apply biometric analysis on entry. Facial recognition algorithms could identify occupants through camera images. The radar sensor's signature data could be used for identity determination. The system could maintain user profiles correlated to identified occupants for personalized settings. Further, a location sensor, such as a GPS sensor, may be used to provide sensor data. Also acoustic sensors inside and outside the vehicle may be used as vehicle sensors.

The system can process the raw sensor data through various techniques to detect presence and/or identify the occupant. For example, algorithms could analyze unique physiological characteristics like fingerprints, vein patterns, or facial geometry to identify the occupant by matching to profiles in a database. The system could maintain lookup tables that associate unique digital IDs from devices or keys to corresponding user profiles. The sensor data containing these digital IDs allows identity lookup. Machine learning models could be trained to recognize distinct patterns in sensor readings that are characteristic of individuals. Fingerprints or signatures for specific identities may be retrieved from databases. New sensor data is matched to these fingerprints for identification. Rules could be defined that compare sensor values to pre-set thresholds or ranges unique to each profile. Readings within an expected range imply a match to a certain occupant. Fusion algorithms could combine sensor readings from multiple inputs and compute a similarity score to profiles. The highest similarity score determines the matching profile and hence occupant identity. Over time, the system could build dynamic profiles of individuals by associating sensor data to feedback like user inputs. Sensor patterns emerge that allow identification of recurring occupants. The occupant data could contain tags, names, or unique IDs that link the sensor readings to the matching user profile representing the identified occupant.

Therefore, vehicle sensor data processing allows robust entry, presence and identity detection which is represented by the occupant data. The processor can then configure or customize the virtual environment accordingly, using the sensor data and/or the occupant data.

Configuring the virtual environment may comprise obtaining, based on the occupant data, a 3D-model representing a meeting area external to the vehicle and a 3D-model representing the occupant, and configuring the interactive virtual environment depicting the 3D-models of the meeting area and the occupant.

In various examples, the processing device receives a detailed 3D model of the external meeting area from memory or over a communication network in response to the occupant data. This meeting area model represents an actual physical location, for example a real location where the occupant usually interacts or communicates with other persons outside the vehicle in a private space. For example, the meeting area is a room in a house, where the occupant will meet the other persons in real live after arriving at destination, after getting out of the vehicle.

A 3D model (avatar) of the occupant can be generated representing the occupant's body shape, clothing, and pose. This 3D occupant model is then embedded and positioned at a virtual location within the rendered 3D meeting area model. Real-time rendering and adapting of the occupant's 3D model based on / using the one or more vehicle sensors may creates an interactive virtual environment depicting the communication space where the meeting will take place, with the 3D occupant model digitally situated within that space. This allows the occupant to experience an immersive preview of the meeting location and visualize themselves participating in the upcoming communication and interaction. The virtual environment provides a digital replica of the physical meeting area with the occupant model integrated into the location before they actually arrive there, such that also other persons can perceive the occupant as in their known meeting area.

The method may further comprise notifying a further person external to the vehicle, with which the occupant intends to communicate, of presence of the occupant in the virtual environment.

In various examples, the method may comprise notifying a further person, which is to be depicted in the virtual environment, and to which the virtual environment with the avatar of occupant may be displayed, and with which the occupant intends to communicate, of the presence of the occupant in the virtual environment. This allows external contacts of the occupant, such as family or friends, to join the occupant in the interactive virtual environment, which can then also be depicted within the virtual meeting area, as will be described in the following.

Notification of the external contact can be performed in various ways. In one example, the processing device retrieves a preferred communication channel for the external contact based on the occupant data. The preferred communication channel could be a phone number, email, social media account, or other channel of communication configured by the occupant. The processing device sends a notification message to the external contact over the preferred communication channel indicating that the occupant is present in the virtual environment.

The method may further comprise obtaining a 3D-model representing the further person, and configuring the interactive virtual environment using the 3D-model of the further person.

In various examples, the method can further comprise obtaining a 3D model (avatar) representing the further person external to the vehicle, and depicting the avatar at a virtual location in the interactive virtual environment using the obtained 3D model of the further person. This allows realistic representations of the external contacts to be rendered in the meeting area of the virtual environment together with the avatar of the vehicle occupant.

The 3D model (avatar) of the further person could be obtained in various ways. **In** one example, the processing device receives the avatar from a database or data storage in the vehicle, in other examples the avatar is communicated in response to the occupant data over an external communication network, i.e. the processing device receives the 3D model representing the further person from a remote computing or cloud device over the communication network. The 3D models may have been generated by 3D scanning techniques and stored in association with user profiles.

Therefore, the interactive virtual environment displayed to the occupant may comprise avatars visually representing the occupant and the further person external to the vehicle. When the virtual environment is displayed to the participants, they can easily recognize who is available for communication in the virtual environment and a corresponding preferred communication channel is used for each person automatically in the background.

In various examples, different communication channels could be used for notifications and interactions between the occupant and external contacts represented as avatars in the virtual environment. Audio channels, wherein the virtual environment could enable voice calls or video calls with audio between the occupant and contacts using speakers, microphones, and audio processing in the vehicle. Text chat, wherein text messages could be exchanged in real-time between the occupant and contacts in the virtual environment using in-vehicle displays and input devices like touchscreens. Augmented reality, wherein avatars of contacts could be visually depicted in the interactive virtual environment and animated to appear talking and gesturing when audio or text from contacts is received. Pre-recorded audio/video, wherein audio or video recordings made by the contacts could be played back to the occupant in the virtual environment when triggered by avatar interactions. Synthetic speech, or text to speech, wherein text received from contacts could be converted to lifelike speech and played through speakers using text-to-speech technology. Speech synthesis, wherein speech inputs made by the occupant could be converted to text using speech recognition and transmitted as text messages to the contacts. Gesture/gaze input, wherein the occupant's gestures or gaze patterns could control interactions with contact avatars hands-free using in-cabin cameras and computer vision. Haptics, wherein contacts could transmit coded vibration patterns to the steering wheel or seats to get the occupant's attention or communicate alerts.

The appropriate communication channel can be automatically selected for occupant and/or the other person in the virtual environment. The communication channel used for communication with the other person can be determined based on the sensor data and/or occupant data. The communication channel may be dynamically adapted during conversation based on or using the vehicle sensor data.

Specifically, the 3D model representing the occupant may be processed by the computing device to create an avatar of the occupant, which represents the occupant and the circumstances as sensed by the vehicle sensors. This may involve extracting key features from the 3D model, such as face, body shape, clothing, etc. and converting them into an avatar form suitable for display in the virtual environment. Similarly, the 3D model representing the further person is processed to generate an avatar representing their likeness. The avatars of the occupant and further person can then interact with each other and the virtual environment, providing an immersive visual experience. The avatar of the occupant may be dynamically adapted based on or using the sensor data and/or the physical state and/or the attention score of the occupant.

These avatars may be animated and/or depicted as interacting with each other based on the vehicle sensor data and/or the occupant data.

In an example, the occupant interacting with the virtual environment is the driver of the vehicle The further person external to the vehicle is a family member or friend of the driver The meeting area represented within the virtual environment is an inside living area belonging to the family member or friend. For example, their common or shared living room. So in this example, while the driver is in the vehicle, they enter a virtual representation of their family member or friend's living room environment. The driver's avatar and the avatar of the family member/friend generated from their 3D models can interact there. This provides the driver with a virtual visiting experience as if the drive was already in the real meeting area through the interactive virtual environment.

The method may further comprise retrieving a preferred communication channel for the further person external to the vehicle. This preferred channel is used to enable interaction between the further person and the occupant within the virtual environment generated in the vehicle.

In an example, during the initiation/configuration of the virtual environment, the occupant can specify in the vehicle system or retrieve over the communication network that Facebook Messenger is the preferred channel to contact their friend. Later, when the occupant enters the vehicle, the system retrieves this preferred Facebook Messenger channel for the friend based on the occupant data. The system uses this channel to send the friend a notification that the occupant is present in the virtual environment and invites the friend to join. Once the friend accepts the invite, the system establishes a connection over the preferred Facebook Messenger channel between the friend and the occupant. This allows the friend and the occupant to communicate and interact within the virtual environment through text, voice, video, or other means using by the preferred communication channel. The virtual environment is configured to facilitate this communication by rendering representations of the communicating occupants in the virtual environment.

By retrieving and leveraging the further person's preferred communication channel, a seamless and natural interactive experience can be provided to connect the vehicle occupant and external contact through the virtual environment.

The method may further comprise acquiring additional sensor data from at least one vehicle sensor monitoring the external traffic conditions surrounding the vehicle, processing the sensor data and the additional sensor data to determine an attention score quantifying the degree of attention required by the occupant in response to the external traffic conditions, and configuring the interactive virtual environment to visually represent the attention score.

In an example, the method involves receiving or measuring additional sensor data from vehicle sensors that monitor the external traffic conditions around the vehicle. For examples, vehicle dynamics sensors such as accelerometer, wheel speed, and other motion data could detect aggressive or unsafe driving behaviors. This could also include cameras, radar, lidar, etc. that detect other vehicles, obstacles, lane markings, etc. This external traffic data is processed along with the occupant sensor data to determine an attention score that quantifies the level of attention the driver/occupant needs to pay to the road based on the current conditions. For example, light traffic may have a low score while heavy traffic or dangerous conditions would have a higher score. The interactive virtual environment is then configured to visually represent this attention score to the occupant. Some examples of visual representation include showing the numerical attention score value or attention level indicator within the virtual environment as a number of color indicator, changing the visualization of the avatar in the virtual environment based on attention score, such as making the virtual scene fade/transparent, shrink in size, or blur when attention score is high, overlaying graphical alerts/notifications when attention score exceeds a threshold, or modulating sounds or music in the virtual environment based on the attention score.

Determination of the attention score allows the virtual environment system to dynamically adapt the virtual environment, specifically in relation to the occupant's avatar, based on the external driving context to indicate the attention required from the occupant for traffic respectively the attention that the occupant can provide to the conversation. The visual representations can also provide an indication to the occupant focus on driving when needed.

Corresponding onboard or vehicle computing devices, and virtual reality systems in vehicles are provided, which can be configured to perform any method or combination of methods as described in the present disclosure.

Such computing devices and virtual reality systems comprise a processing unit and memory, wherein the memory comprises instructions that, when executed by the processor, cause the computing device to perform the following steps. In a step, sensor data is received from at least one sensor onboard the vehicle. In a step, the received sensor data is processed to determine occupant data related to an occupant inside the vehicle. In a step, an interactive virtual environment is configured based on the determined occupant data. In a step, the configured interactive virtual environment is output for displaying to the occupant on a vehicle display device.

A vehicle comprises a computing device or virtual reality system as described in the present disclosure. For such a processing devices, systems and vehicles, similar technical effects may be achieved as described throughout the present disclosure.

It is to be understood that the features mentioned above and features yet to be explained below can be used not only in the respective combinations indicated, but also in other combinations or in isolation, without departing from the scope of the present disclosure. In particular, the features mentioned above and those yet to be explained below may be used not only in the respective combinations indicated, but also in other combinations or in isolation without departing from the scope of the disclosure.

Therefore, the above summary is merely intended to give a short overview over some features of some embodiments and implementations and is not to be construed as limiting. Other embodiments may comprise other features than the ones explained above.

### BRIEF DESCRIPTION OF THE DRAWINGS

These and other objects of the invention will be appreciated and understood by those skilled in the art from the detailed description of the preferred embodiments and the following drawings in which like reference numerals refer to like elements.
FIG. 1 schematically illustrates an overview of a vehicle, according to various embodiments.
FIG. 2 schematically illustrates a virtual environment in a vehicle, according to various embodiments.
FIG. 3 schematically illustrates steps of a method for providing an interactive virtual environment within a vehicle, according to various embodiments.
FIG. 4 schematically illustrates a computing device, which is configured to perform a method for providing an interactive virtual environment within a vehicle, according to various embodiments.

### DETAILED DESCRIPTION OF EXAMPLES

In the following, embodiments of the invention will be described in detail with reference to the accompanying drawings. It should be understood that the following description of embodiments is not to be taken in a limiting sense. The scope of the invention is not intended to be limited by the embodiments described hereinafter or by the drawings, which are taken to be illustrative examples of the general inventive concept. The features of the various embodiments may be combined with each other, unless specifically noted otherwise.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques will be described that relate providing a virtual communication environment to an occupant of a vehicle, specifically while using and/or driving the vehicle.

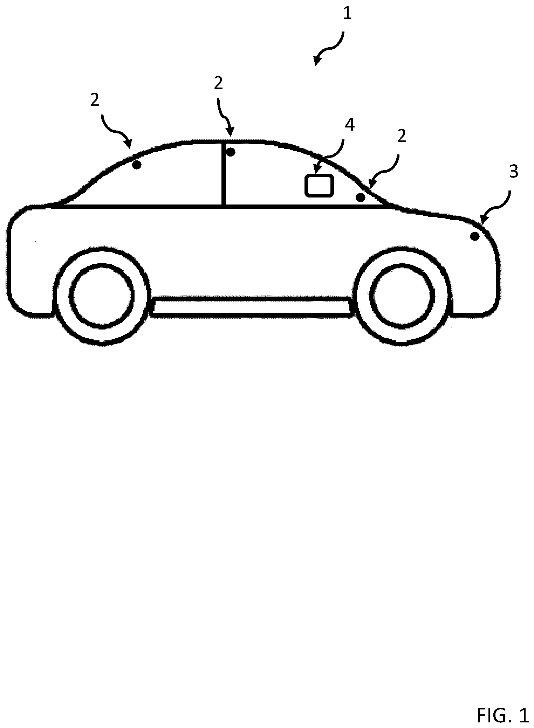

FIG. 1 schematically illustrates an overview of a vehicle 1, according to various embodiments.

The vehicle 1 comprises internal or in-cabin vehicle sensors 2. These sensors 2 acquire signals from the interior of the vehicle, and provide sensor data, which can be processed to determine various types of occupant data, such as presence and identity of the occupant. In various examples, the sensors may include an in-cabin camera, a fatigue detection sensor, a seat-embedded pressure sensor, a smartphone-enabled NFC or Bluetooth sensor, a digital key sensor, and an in-cabin radar sensor. Additionally, external sensors 3, which are monitoring an exterior of the vehicle, are capable of acquiring data for external traffic conditions. The vehicle 1 also includes a display device 4, which may be an integrated infotainment screen, a heads-up display projected onto the windshield, a digital instrument cluster, a rear-seat entertainment screen, or a detachable tablet or mobile device docked within the vehicle.

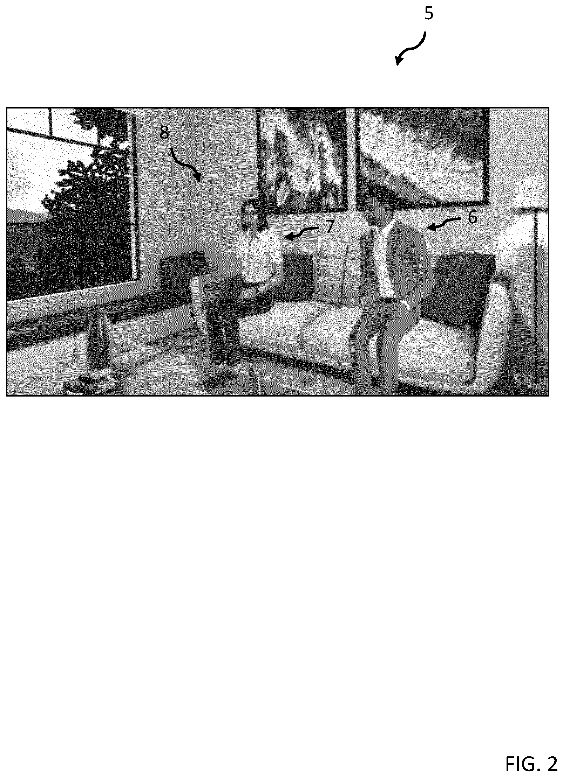

Figure 2 schematically illustrates a virtual environment 5 in a vehicle, according to various embodiments.

The virtual environment 5 includes an avatar 6, which represents the occupant inside the vehicle. The avatar 6 is generated based on occupant data from the in-cabin sensors 2. In this way, the avatar serves as an indication that the occupant is present and ready for communication. An additional avatar 7 represents a woman, which is at the time located external to the vehicle. The presence of this avatar 7 in the virtual environment serves as an indication that the woman is ready for communicating as well. Both avatars 6 and 7 are situated in a meeting area 8, a 3D modeled representation of a physical location external to the vehicle, in this case the living room of the occupant and the woman. The virtual environment can be configured to include animated 3D models of the occupant and the external person, based at least partly on the sensor data and/or the occupant data. The virtual environment may also use a preferred communication channel for the external person, which is determined for each of the persons in the virtual environment. An attention score is visually represented, indicating the level of attention the occupant should give to external traffic conditions.

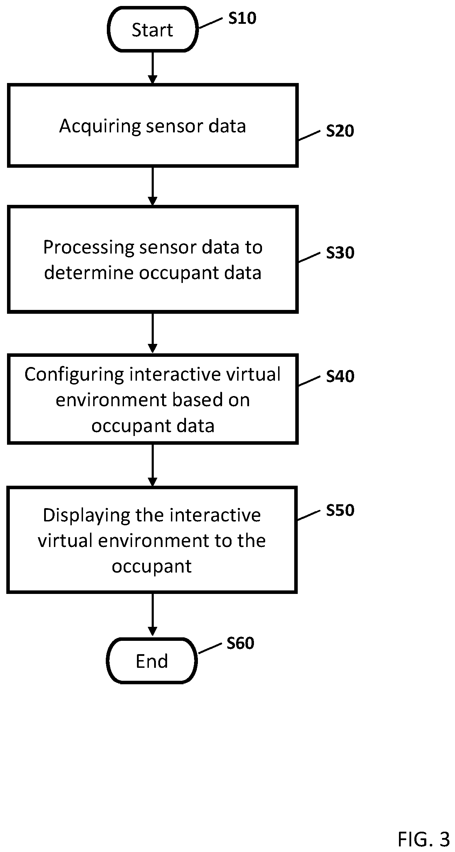

FIG. 3 schematically illustrates steps of a method for providing an interactive virtual environment within a vehicle, according to various embodiments.

The method begins with step S10. In step S20, sensor data is acquired from at least one vehicle sensor. In step S30, the sensor data is processed to determine occupant data associated with an occupant inside the vehicle. In step S40, an interactive virtual environment is configured based on the occupant data. In step S50, the interactive virtual environment is displayed to the occupant on a vehicle display. The method ends in step S60.

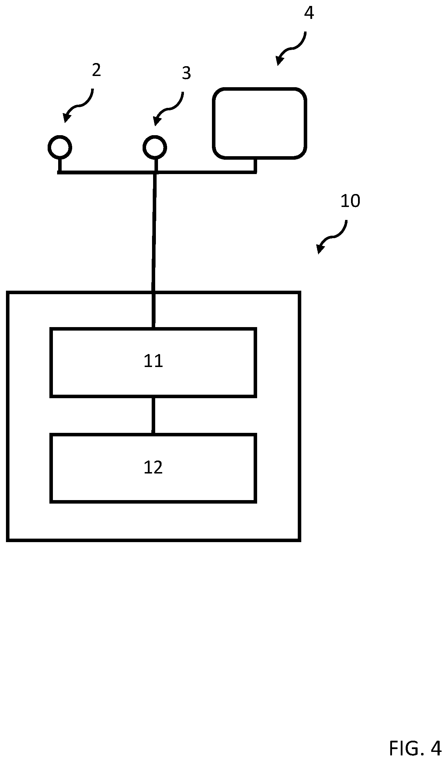

FIG. 4 schematically illustrates a computing device 10, which is configured to perform a method for providing an interactive virtual environment within a vehicle, according to various embodiments.

As can be seen in FIG. 4, a computing device 10 comprises a processor 11 and memory 12, wherein the memory 12 comprises program code that, when executed by the processor 11, causes the processing device 10 to perform a method for providing an interactive virtual environment within a vehicle, according to the following steps: Receive sensor data from at least one sensor 2,3 onboard the vehicle, process the received sensor data to determine occupant data related to an occupant inside of the vehicle, configure an interactive virtual environment based on the determined occupant data, and output the configured interactive virtual environment for displaying to the occupant on a vehicle display device 4.

The computing device 10 may be integrated within the vehicle 1 and utilize data from internal sensors 2 and external sensors 3 to identify occupants and customize the virtual environment experience accordingly. The computing device 10 facilitates communication between the occupant and other persons represented as avatars in the virtual environment.

The computing device 10 together with the display 4 and sensors 2 may also be referred to as a virtual environment system.

Summarizing, techniques for establishing an interactive virtual environment within a vehicle are provided. Sensor data from at least one sensor onboard the vehicle is collected. This sensor data is processed by an onboard computing device to derive specific occupant data related to the occupant, including information about presence, identity, location, or physical state of the occupant. Utilizing this occupant data, the computing device configures an interactive virtual environment, which includes a digital avatar representing the occupant. This avatar is then displayed in the virtual environment, to indicate presence and availability of the occupant for communication with other persons. The virtual environment may include the avatar of another person, facilitating real-time communication between them. The personalized and interactive virtual space is displayed to the occupant through an integrated display within the vehicle, together with the avatar of the other person.

The methods for providing an interactive virtual communication environment within a vehicle may use real-time sensor data. The method acquires data from one or more vehicle sensors, which is then processed to derive real-time occupant-specific data. Using this occupant data, the method dynamically configures a virtual environment that is displayed on the vehicle's display device. Within the virtual environment, an avatar representing the vehicle's occupant is generated based on the real-time sensor data and associated occupant information. This avatar serves as an indicator of the occupant's presence, attention and identity within the virtual environment, providing a more accurate and real-time indication of the occupant's availability for interaction, thereby reducing hardware complexity of the communication platform inside the vehicle.

While the methods, computing devices, virtual reality systems and vehicles for providing virtual communication environments described herein have been illustrated in the context of a land vehicle, specifically a car, it should be understood that the application of the described techniques and configurations is not limited only to cars or land vehicles.

The described techniques are applicable to a variety of vehicles and transportation methods, including but not limited to, airplanes, boats, trains, or other forms of transportation. The examples provided in the context of a car are intended to illustrate the concepts in a specific embodiment, but the broad techniques could be applied to other vehicles or moving objects used for transporting persons. Further adaptations or modifications would be necessary to optimize the methods and systems for different vehicles or environments, but the core techniques related to vehicle control, passenger monitoring, entertainment systems, and other functions could still provide value in those alternative implementations.

The description and figures are merely illustrative and do not limit the scope of the claims to any particular implementation or use. Although the disclosed techniques have been described with respect to certain preferred embodiments, equivalents and modifications will occur to others skilled in the art upon the reading and understanding of the specification. The present disclosure includes all modifications and is limited only by the scope of the appended claims.

## Claims

1. A method for providing an interactive virtual environment within a vehicle, comprising:
- acquiring sensor data by at least one vehicle sensor;
- processing, by a processing device, the sensor data to determine occupant data associated with an occupant inside the vehicle;
- obtaining, based on the occupant data, a 3D-model representing a meeting area external to the vehicle and a 3D-model representing the occupant;
- configuring, by a processing device, an interactive virtual environment depicting the 3D-models of the meeting area and the occupant using the occupant data; and
- displaying the interactive virtual environment to the occupant by a vehicle display.

2. The method of claim 1, wherein the at least one sensor is selected from a group consisting of an in-cabin camera, a fatigue detection sensor, a seat-embedded pressure sensor, a smartphone-enabled NFC or Bluetooth sensor, a digital key sensor, and an in-cabin radar sensor.

3. The method of any preceding claim, wherein processing the sensor data comprises detecting entry of the occupant into the vehicle, and the occupant data includes an indication of the presence of occupant in the cabin of the vehicle.

4. The method of any preceding claim, wherein processing the sensor data comprises determining an identity of the occupant, and the occupant data includes identification data representing the identity of the occupant.

5. The method of any preceding claim, further comprising
- notifying a further person external to the vehicle, with which the occupant intends to communicate, of presence of the occupant in the virtual environment.

6. The method of any preceding claim, further comprising:
- obtaining a 3D-model representing the further person, and configuring the interactive virtual environment using the 3D-model of the further person.

7. The method of any preceding claim, wherein obtaining the 3D-model of the further person comprises:
- communicating at least part of the occupant data over a communication network;
- receiving, in response to the communicating, over the communication network, the 3D-model representing the further person.

8. The method of claim 7, wherein the displayed interactive environment comprises avatars derived from the 3D-models of the occupant and the further person.

9. The method of any preceding claim, wherein the occupant is the driver of the vehicle, the further person is a family member or friend of the occupant located in an inside living area, which is represented as the meeting area within the virtual environment.

10. The method any preceding claim, further comprising:
- retrieving a preferred communication channel for the further person, which enables the further person to interact with the occupant within the vehicle's interactive virtual environment; and
- configuring the interactive virtual environment using the preferred communication channel.

11. The method of any preceding claim, further comprising:
- acquiring additional sensor data from at least one vehicle sensor monitoring the external traffic conditions surrounding the vehicle;
- processing the sensor data and the additional sensor data to determine an attention score quantifying the degree of attention required by the occupant in response to the external traffic conditions; and
- configuring the interactive virtual environment to visually represent the attention score.

12. The method of any preceding claim, wherein the vehicle display device is selected from a group consisting of:
- an integrated infotainment screen;
- a heads-up display (HUD) projected onto the windshield of the vehicle;
- a digital instrument cluster;
- a rear-seat entertainment screen; or
- a detachable tablet or mobile device docked within the vehicle.

13. A computing device integrated in a vehicle, comprising a processing unit and memory, wherein the memory comprises instructions that, when executed by the processor, cause the computing device to perform the following steps:
- receive sensor data from at least one sensor onboard the vehicle;
- process the received sensor data to determine occupant data related to an occupant inside of the vehicle;
- obtain, based on the occupant data, a 3D-model representing a meeting area external to the vehicle and a 3D-model representing the occupant;
- configure an interactive virtual environment depicting the 3D-models of the meeting area and the occupant based on the determined occupant data; and
- output the configured interactive virtual environment for displaying to the occupant on a vehicle display device.

14. Vehicle comprising the computing device of claim 13.

## Patentansprüche

1. Verfahren zum Bereitstellen einer interaktiven virtuellen Umgebung innerhalb eines Fahrzeugs, umfassend:
- Erfassen von Sensordaten durch mindestens einen Fahrzeugsensor;
- Verarbeiten der Sensordaten durch eine Verarbeitungsvorrichtung, um Insassendaten zu bestimmen, die einem Insassen im Inneren des Fahrzeugs zugeordnet sind;
- Erhalten, basierend auf den Insassendaten, eines 3D-Modells, das einen Besprechungsbereich außerhalb des Fahrzeugs darstellt, und eines 3D-Modells, das den Insassen darstellt;
- Konfigurieren, durch eine Verarbeitungsvorrichtung, einer interaktiven virtuellen Umgebung, die die 3D-Modelle des Besprechungsbereichs und des Insassen unter Verwendung der Insassendaten abbildet; und
- Anzeigen der interaktiven virtuellen Umgebung für den Insassen durch eine Fahrzeuganzeige.

2. Verfahren nach Anspruch 1, wobei der mindestens eine Sensor ausgewählt ist aus einer Gruppe bestehend aus einer Innenraumkamera, einem Ermüdungserkennungssensor, einem in den Sitz eingebetteten Drucksensor, einem smartphonefähigen NFC- oder Bluetooth-Sensor, einem digitalen Schlüsselsensor und einem Innenraumradarsensor.

3. Verfahren nach einem der vorhergehenden Ansprüche, wobei Verarbeiten der Sensordaten Erkennen des Eintritts des Insassen in das Fahrzeug umfasst und die Insassendaten einen Hinweis auf die Anwesenheit eines Insassen im Innenraum des Fahrzeugs beinhalten.

4. Verfahren nach einem der vorhergehenden Ansprüche, wobei Verarbeiten der Sensordaten Bestimmen einer Identität des Insassen umfasst und die Insassendaten Identifikationsdaten beinhalten, die die Identität des Insassen darstellen.

5. Verfahren nach einem der vorhergehenden Ansprüche, ferner umfassend
- Benachrichtigen einer weiteren Person außerhalb des Fahrzeugs, mit der der Insasse zu kommunizieren beabsichtigt, über die Anwesenheit des Insassen in der virtuellen Umgebung.

6. Verfahren nach einem der vorhergehenden Ansprüche, ferner umfassend:
- Erhalten eines 3D-Modells, das die weitere Person darstellt, und Konfigurieren der interaktiven virtuellen Umgebung unter Verwendung des 3D-Modells der weiteren Person.

7. Verfahren nach einem der vorhergehenden Ansprüche, wobei Erhalten des 3D-Modells der weiteren Person Folgendes umfasst:
- Übermitteln zumindest eines Teils der Insassendaten über ein Kommunikationsnetzwerk;
- Empfangen des 3D-Modells, das die weitere Person darstellt, über das Kommunikationsnetzwerk als Reaktion auf das Übermitteln.

8. Verfahren nach Anspruch 7, wobei die angezeigte interaktive Umgebung Avatare umfasst, die aus den 3D-Modellen des Insassen und der weiteren Person abgeleitet sind.

9. Verfahren nach einem der vorhergehenden Ansprüche, wobei der Insasse der Fahrer des Fahrzeugs ist, die weitere Person, die sich in einem innen gelegenen Wohnbereich befindet, ein Familienmitglied oder Freund des Insassen ist, wobei der Wohnbereich als Besprechungsbereich innerhalb der virtuellen Umgebung dargestellt wird.

10. Verfahren nach einem der vorhergehenden Ansprüche, ferner umfassend:
- Abrufen eines bevorzugten Kommunikationskanals für die weitere Person, der es der weiteren Person ermöglicht, mit dem Insassen innerhalb der interaktiven virtuellen Umgebung des Fahrzeugs zu interagieren; und
- Konfigurieren der interaktiven virtuellen Umgebung unter Verwendung des bevorzugten Kommunikationskanals.

11. Verfahren nach einem der vorhergehenden Ansprüche, ferner umfassend:
- Erfassen zusätzlicher Sensordaten von mindestens einem Fahrzeugsensor, der die äußeren Verkehrsbedingungen in der Umgebung des Fahrzeugs überwacht;
- Verarbeiten der Sensordaten und der zusätzlichen Sensordaten, um einen Aufmerksamkeitswert zu bestimmen, der den Grad der vom Insassen als Reaktion auf die äußeren Verkehrsbedingungen erforderlichen Aufmerksamkeit quantifiziert; und
- Konfigurieren der interaktiven virtuellen Umgebung, um den Aufmerksamkeitswert visuell darzustellen.

12. Verfahren nach einem der vorhergehenden Ansprüche, wobei die Fahrzeuganzeigevorrichtung ausgewählt ist aus einer Gruppe bestehend aus:
- einem integrierten Infotainmentbildschirm;
- einem Head-up-Display (HUD), das auf die Windschutzscheibe des Fahrzeugs projiziert wird;
- einem digitalen Kombiinstrument;
- einem Unterhaltungsbildschirm für die Rücksitze; oder
- einem abnehmbaren Tablet oder einer mobilen Vorrichtung, das bzw. die im Fahrzeug angedockt ist.

13. In ein Fahrzeug integrierte Rechenvorrichtung, umfassend eine Verarbeitungseinheit und einen Speicher, wobei der Speicher Anweisungen umfasst, die bei Ausführung durch den Prozessor die Rechenvorrichtung veranlassen, die folgenden Schritte auszuführen:
- Empfangen von Sensordaten von mindestens einem Sensor an Bord des Fahrzeugs;
- Verarbeiten der empfangenen Sensordaten, um Insassendaten zu bestimmen, die sich auf einen Insassen im Inneren des Fahrzeugs beziehen;
- Erhalten, basierend auf den Insassendaten, eines 3D-Modells, das einen Besprechungsbereich außerhalb des Fahrzeugs darstellt, und eines 3D-Modells, das den Insassen darstellt;
- Konfigurieren einer interaktiven virtuellen Umgebung, die die 3D-Modelle des Besprechungsbereichs und des Insassen basierend auf den bestimmten Insassendaten abbildet; und
- Ausgeben der konfigurierten interaktiven virtuellen Umgebung zum Anzeigen für den Insassen auf einer Fahrzeuganzeigevorrichtung.

14. Fahrzeug, umfassend die Rechenvorrichtung nach Anspruch 13.

## Revendications

1. Procédé de fourniture d'un environnement virtuel interactif à l'intérieur d'un véhicule, comprenant :
- l'acquisition de données provenant de capteurs par au moins un capteur du véhicule ;
- le traitement, par un dispositif de traitement, des données du capteur pour déterminer les données relatives à l'occupant associé à un occupant à l'intérieur du véhicule ;
- l'obtention, sur la base des données relatives à l'occupant, d'un modèle 3D représentant une zone de rencontre extérieure au véhicule et d'un modèle 3D représentant l'occupant ;
- la configuration, par un dispositif de traitement, d'un environnement virtuel interactif représentant les modèles 3D de la zone de rencontre et de l'occupant utilisant les données relatives à l'occupant ; et
- l'affichage de l'environnement virtuel interactif à l'occupant par l'intermédiaire d'un écran du véhicule.

2. Procédé selon la revendication 1, dans lequel le au moins un capteur est choisi dans un groupe constitué d'une caméra embarquée, d'un capteur de détection de fatigue, d'un capteur de pression intégré au siège, d'un capteur NFC ou Bluetooth compatible avec un smartphone, d'un capteur de clé numérique et d'un capteur radar embarqué.

3. Procédé selon une quelconque revendication précédente, dans lequel le traitement des données du capteur comprend la détection de l'entrée de l'occupant dans le véhicule, et les données relatives à l'occupant comportent une indication de la présence de l'occupant dans l'habitacle du véhicule.

4. Procédé selon une quelconque revendication précédente, dans lequel le traitement des données du capteur comprend la détermination de l'identité de l'occupant, et les données relatives à l'occupant comportent des données d'identification représentant l'identité de l'occupant.

5. Procédé selon une quelconque revendication précédente, comprenant en outre :
- l'information d'une autre personne extérieure au véhicule, avec laquelle l'occupant a l'intention de communiquer, de la présence de l'occupant dans l'environnement virtuel.

6. Procédé selon une quelconque revendication précédente, comprenant en outre :
- l'obtention d'un modèle 3D représentant l'autre personne, et la configuration de l'environnement virtuel interactif à l'aide du modèle 3D de l'autre personne.

7. Procédé selon une quelconque revendication précédente, dans lequel l'obtention du modèle 3D de l'autre personne comprend :
- la communication d'au moins une partie des données relatives à l'occupant par un réseau de communication ;
- la réception, en réponse à la communication, par le réseau de communication, du modèle 3D représentant l'autre personne.

8. Procédé selon la revendication 7, dans lequel l'environnement interactif affiché comprend des avatars dérivés des modèles 3D de l'occupant et de l'autre personne.

9. Procédé selon une quelconque revendication précédente, dans lequel l'occupant est le conducteur du véhicule, l'autre personne est un membre de la famille ou un ami de l'occupant situé dans une zone de vie intérieure, qui est représentée comme la zone de rencontre dans l'environnement virtuel.

10. Procédé selon une quelconque revendication précédente, comprenant en outre :
- la récupération d'un canal de communication privilégié pour l'autre personne, qui permet à l'autre personne d'interagir avec l'occupant à l'intérieur de l'environnement virtuel interactif du véhicule ; et
- la configuration de l'environnement virtuel interactif à l'aide du canal de communication privilégié.

11. Procédé selon une quelconque revendication précédente, comprenant en outre :
- l'acquisition de données de capteurs supplémentaires provenant d'au moins un capteur du véhicule surveillant les conditions de circulation extérieures autour du véhicule ;
- le traitement des données des capteurs et des données supplémentaires des capteurs afin de déterminer un score d'attention quantifiant le degré d'attention requis de l'occupant en réponse aux conditions de circulation extérieures ; et
- la configuration de l'environnement virtuel interactif pour représenter visuellement le score d'attention.

12. Procédé selon une quelconque revendication précédente, dans lequel le dispositif d'affichage du véhicule est choisi dans un groupe constitué des éléments suivants :
- un écran d'info-divertissement intégré ;
- un affichage tête haute (HUD) projeté sur le pare-brise du véhicule ;
- un tableau de bord numérique ;
- un écran de divertissement pour les passagers arrière ; ou
- une tablette ou un appareil mobile amovible, intégré au véhicule.

13. Dispositif informatique intégré à un véhicule, comprenant une unité de traitement et une mémoire, dans lequel la mémoire contient des instructions qui, lorsqu'elles sont exécutées par le processeur, amènent le dispositif informatique à effectuer les étapes suivantes :
- recevoir des données de capteurs provenant d'au moins un capteur embarqué sur le véhicule ;
- traiter les données des capteurs reçues pour déterminer les données relatives à un occupant à l'intérieur du véhicule ;
- obtenir, sur la base des données relatives à l'occupant, un modèle 3D représentant une zone de rencontre extérieure au véhicule et un modèle 3D représentant l'occupant ;
- configurer un environnement virtuel interactif représentant les modèles 3D de la zone de rencontre et de l'occupant, sur la base des données déterminées relatives à l'occupant ; et
- afficher l'environnement virtuel interactif configuré à l'occupant sur un dispositif d'affichage du véhicule.

14. Véhicule comprenant le dispositif informatique selon la revendication 13.
